# EUROPEAN PATENT APPLICATION

(11) **EP 1 236 562 A2**
(43) Date of publication of application: **04.09.2002**
(21) Application number: 02004901.1
(22) Date of filing: 04.03.2002
(51) Int. Cl.: B29C 51/42

(54) **Device and method for cooling portions of thermoplastic sheet**

(30) Priority: 02.03.2001 IT BO010117
(71) Applicant: COMI S.r.l., I-24040 Zingonia (Bergamo) (IT)
(72) Inventor: Ballabio, Enzo, 24049 Verdellino (BG) (IT); Sertori, Remo, 24049 Verdellino (BG) (IT)
(74) Representative: Negrini, Elena

(57) **Abstract**

A device for cooling portions of a thermoplastic sheet in a heating station (1), this latter of the type including at least an upper heating panel (2), at least a lower heating panel (3) and transfer means having at least a couple of clamping means (4) having adjustable distance and fit for supporting the longitudinal edges of the sheet (5).

The device (10) includes front cooling means, upper (14) and lower (15), and back cooling means, upper (12) and lower (13). The distance between the cooling means front (14, 15) and back (12, 13) is defined in adjustable way by longitudinal adjustment members (18) which locate said cooling means front (14, 15) and back (12, 13) against the transversal edges of the sheet (5) to cool these latter avoiding their softening.

## Description

The present invention relates to technical field of thermoforming by pressure differences band sheets or plates of thermoplastic material.

Particularly the invention refers to a device for cooling portions of a thermoplastic sheet and related method for cooling in order to avoid the softening of said portions during the warm up in heating stations.

In the machine for thermoforming by pressure difference, a die permanently deforms a plate made of thermoplastic material softened by a set of heating stations. In the heating stations, the longitudinal edges of the plate are fixed to pliers or other elements of transport and support means of the plate. In correspondence of the softening, this latter buckles due to its own weight, forming a kind of depression whose bending extends to the transversal edges of the plate.

There are known means assembled in the heating stations consisting of rods or grids for supporting the softened or plasticized plate, in order to limit the bending of this latter and its transversal edges.

The main drawback of the known rods or grids consists in that they do not support the softened plate in correspondence of the movement of this latter from the heating station to the moulding station and thus cannot avoid the bending of the transversal edges of the plate. This last bending can cause dangerous irregularities and imperfection in the moulding.

A further drawback of the known rods and grids consists in that they allow the bending of the plate surface approximately festoon or quilt shaped up to the transversal edges so endangering the homogeneity and the regularity of the moulding.
The main object of the present invention is to propose a device and a method for cooling portions of the thermoplastic plate without buckling in correspondence of the moulding or the forming and, therefore, fit to avoid the softening and the bending at least of the transversal edges of the thermoplastic plate.

A further object is to propose a device and a method fit to limit the bending of the surface of the plate preventing the softening of the plate middle portions, which cannot be deformed by the mould.

Other object is to propose an economically advantageous device, reliable and having a simple maintenance.

The above-mentioned object are achieved according with the content of the claims.

The characteristics of the present invention are underlined in the following with particular reference to the attached drawings, in which:
- figure 1 shows a schematic side view of the device object of the present invention, in an assembling condition in a heating station, in which some parts have been removed for better underlining other ones;
- figure 2 shows a schematic section view according to plain II - II of the figure 1 device, in which some parts have been removed for better underlining other ones and in which upper cooling means are shown removed from clamping means for a better intelligibility;
- figure 3 shows a plant view of the figure 1 device in which parts have been removed for better underlining other ones;
- figure 4A shows a partial enlarged front view of the figure 2 device;
- figure 4B shows a partial enlarged front view of the of figure 2 device;
- figures 5 - 10 show section view respectively according to plane V-V, VI-VI, VII-VII of figure 4A and VIII-VIII, IX-IX and X-X of figure 4B;

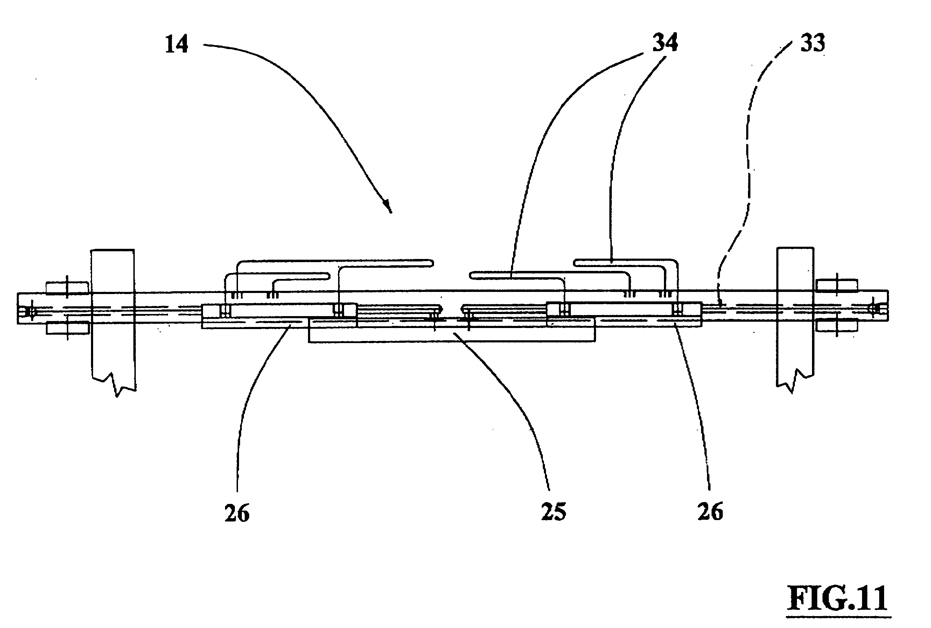

- figure 11 shows an enlarged plan view of the figure 4A element in a maximum width condition in which some parts have been removed for better underlining other ones;
- figures 12 and 13 show respectively side and plant views of a variant of the device object of the present invention in which parts have been removed for better underlining other ones.

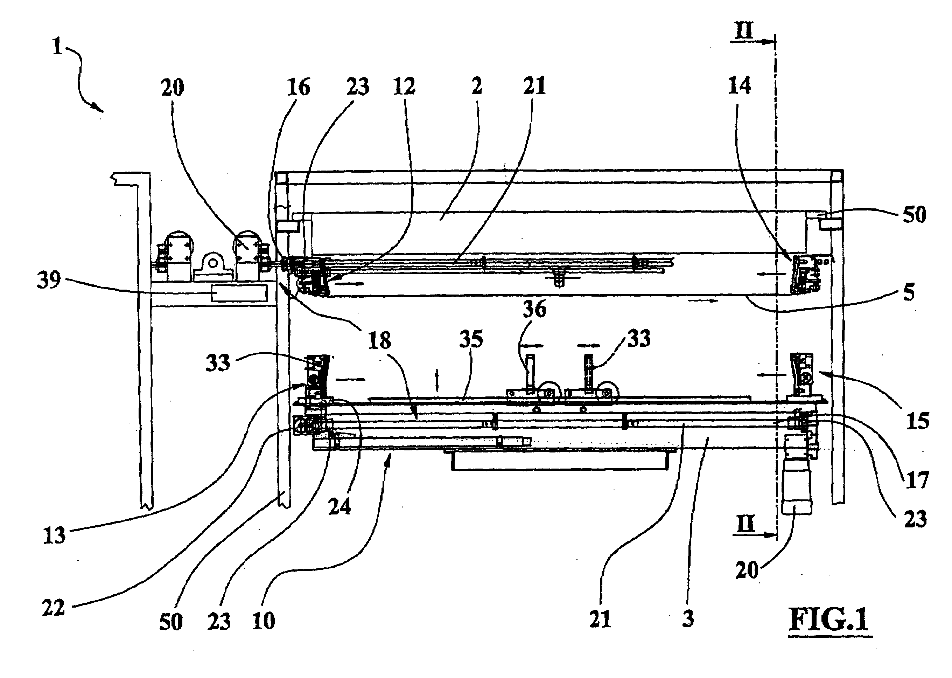

With reference to figure 1, numeral 1 indicates a heating station for conditioning and/or preheating and/or heating up to the softening temperature at which there is the softening of a sheet 5 to be thermoformed by means of a thermoforming station working by pressure differences, positioned downstream the heating station and not shown.

The heating station 1 includes a support structure 50, an upper heating panel 2 and a lower heating panel 3. The upper panel 2 is positioned in the upper part of the structure 50 while the lower panel 3 is vertically moved. The two panels 2, 3 are, for instance, of modular type having series of infrared irradiative elements. The heating panels upper 2 and lower 3, heat the sheet 5, interposed between them, by irradiating the sheet upper and lower surfaces with infrared radiation produced by the irradiative elements.

The sheet 5 is interposed between the panels upper 2 and lower 3 by transfer means having at least a couple of clamping means 4 consisting of, for instance, in pliers with longitudinal jaws for supporting the longitudinal edges of the sheet 5. The distance between the clamping means 4 is adjustable to allow the transport and the support of sheets 5 having different width.

The numeral 10 indicates the device object of the present invention shown in an installation or assembling condition to the heating station 1.

The device 10 includes cooling means front 14, 15 and back 12, 13 fit to mate the transversal edges, front and back, of the sheet 5 in order to screen these latter from the infrared radiation of the panels 2, 3 and to cool them in such a way to avoid their softening.

The cooling means 12 and 14, also named upper cooling means, screen the upper transversal edges of the sheet 5 from the upper panel 2.

The cooling means 13 and 15, also named lower cooling means, screen the lower transversal edges of the sheet 5 from the lower panel 3.

The screening is carried out by the cooling means 12, 13, 14 and 15 which, interposing between the panels 2, 3 and the surfaces of the transversal edges of the sheet 5, shade these latter from the infrared radiation emitted by the panels 2, 3. The cooling is produced by means of circulation of cooling fluid, for instance water, in ducts 33 that pass through the cooling means 12, 13, 14 and 15. The ducts 33 can be, for instance, with open circuit or closed circuit including circulation pumps and cooling thermal exchanger.

The reciprocal distance between the cooling means front 14, 15, and back 12 and 13 is defined in adjustable way by longitudinal adjustment members 18 to allow the cooling means to match the transversal edges of sheets 5 with different length.

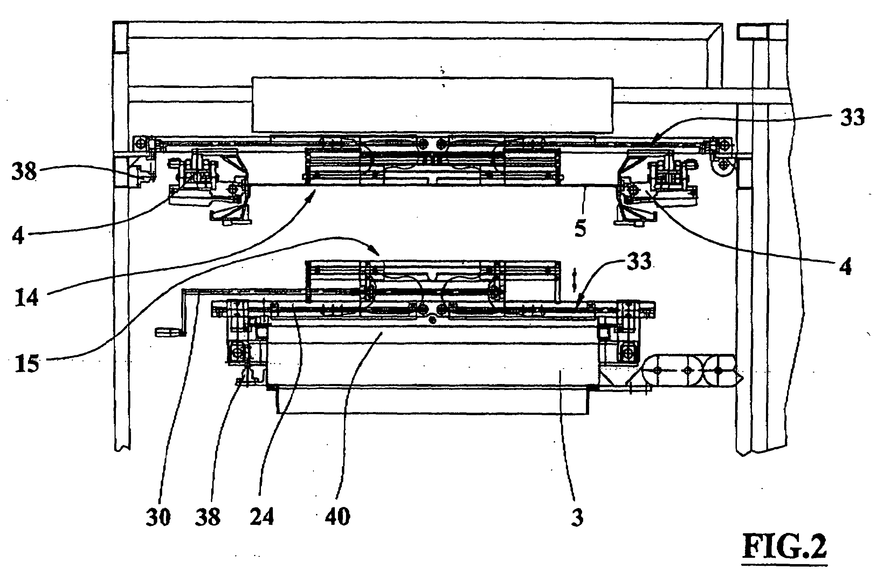

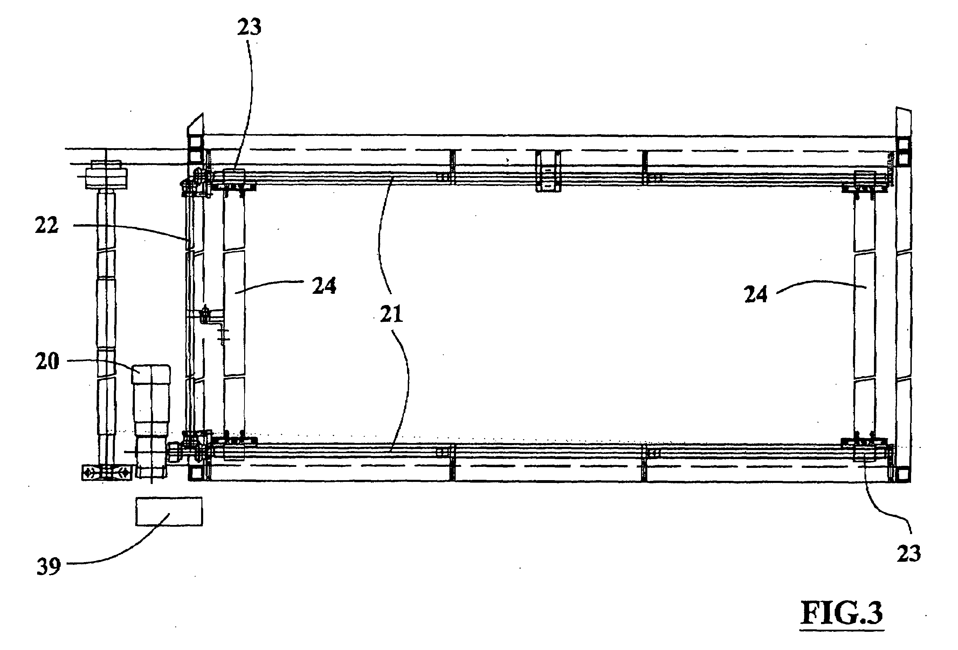

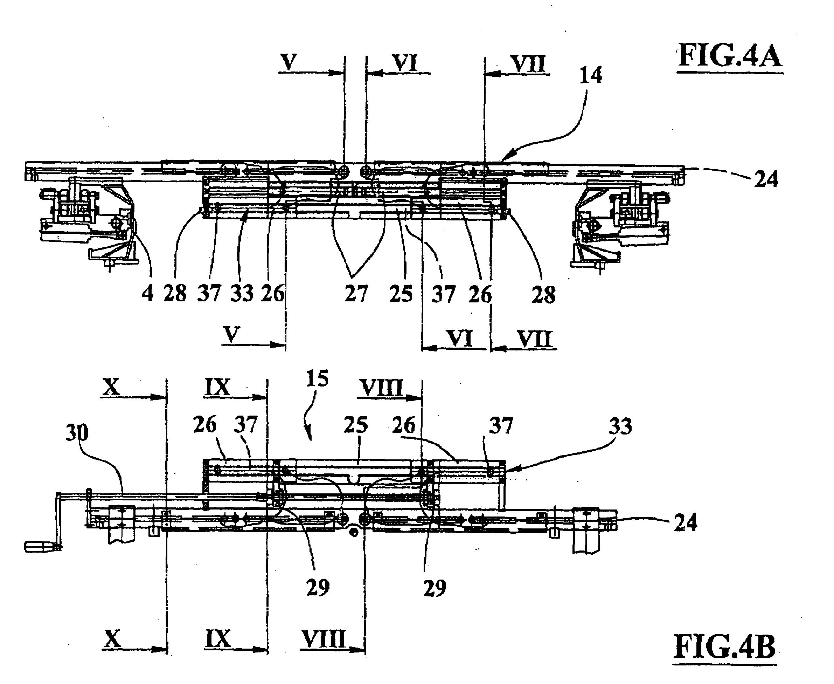

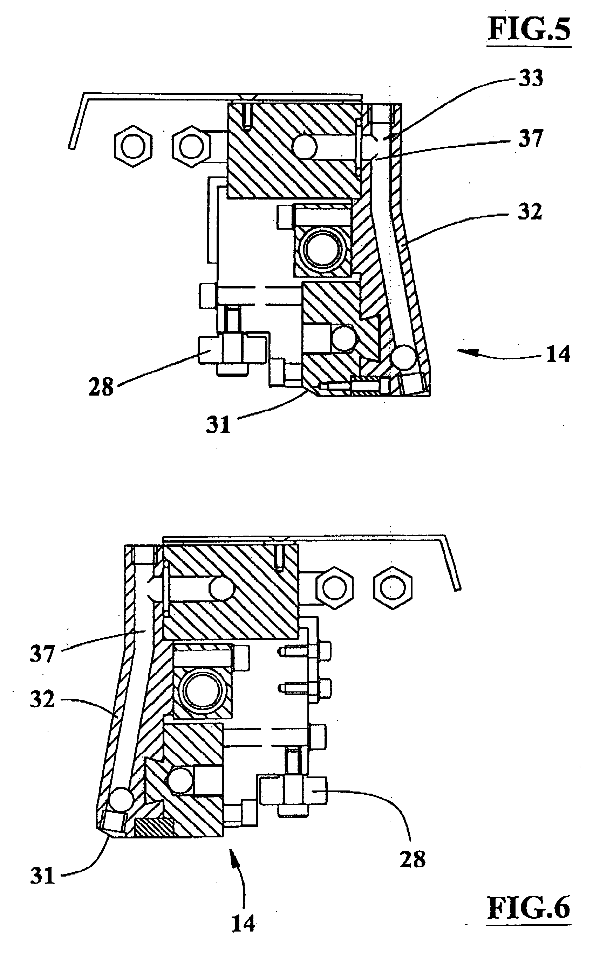

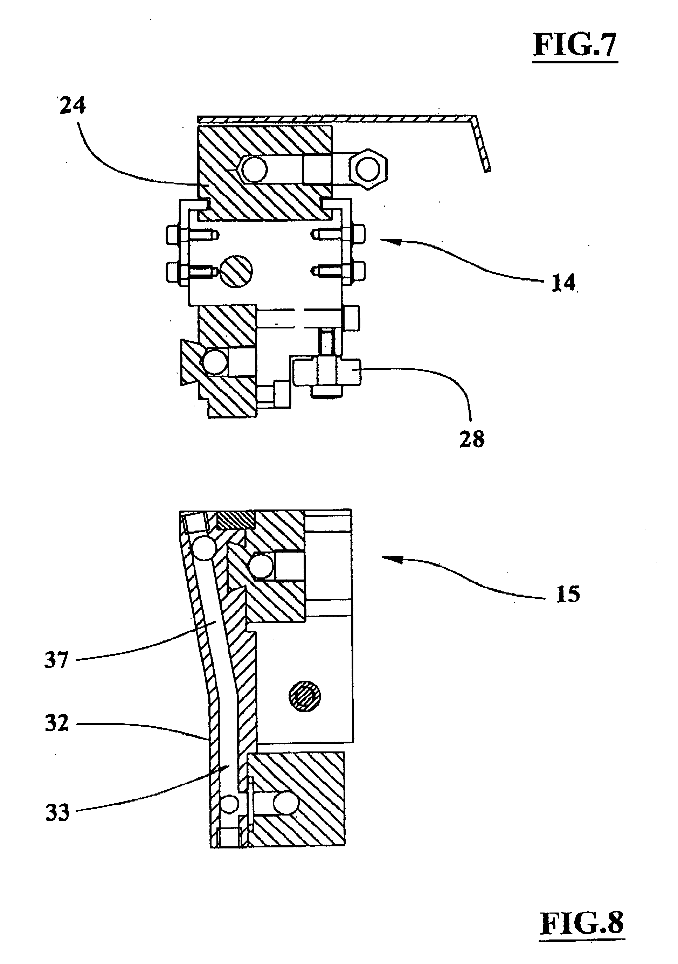

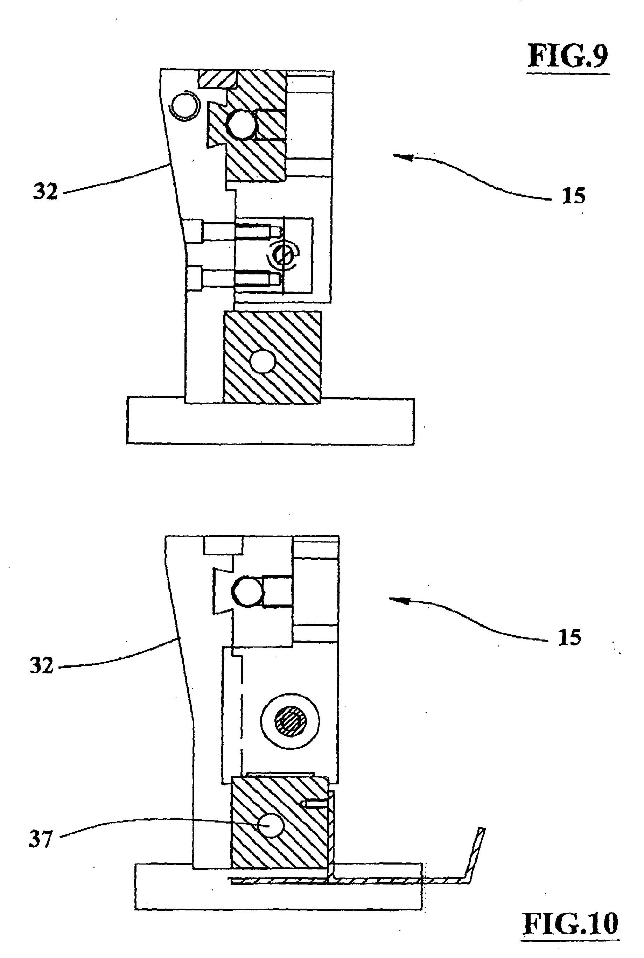

With reference to figures 2 - 10, the cooling means upper 12, 14 and lower 13, 15 are respectively associated to adjustment means upper 16 and lower 17 of the longitudinal adjustment members 18.

The structure 50 of the station 1 rigidly supports the upper adjustment means 16 and the lower panel 3 supports the lower adjustment means 17. Therefore, the upper cooling means 12, 14 are fixed while those lower 13, 15 are vertically movable accordingly to the lower panel 3 that, after the softening of the sheet 5, descend for avoiding interferences of the portions bent toward the lower part of the sheet 5, during the transfer of this latter into the moulding station.

Each adjustment upper 16 and lower 17 mean includes a motor 20 for driving two longitudinal threaded shafts 21. The motor 20, for instance of electric type with reduction gear, is coupled to one of the two longitudinal shafts 21 which transmit the motion to the other longitudinal shaft 21, through a transversal shaft 22. The connection between the longitudinal shafts 21 and the transversal shaft 22 is carried out for instance, by means of a bevel gear pair. Each longitudinal shaft 21 has two threaded portions, for instance right-hand the front portion and left-hand the back portion or vice versa, which engage respective female elements 23 fixed to the ends of support crosspieces 24, each supporting one of the cooling means upper 12, 14 or lower 13, 15. Then the operation of the motors 20 cause the cooling means 12, 13, 14 and 15 moving away or near to the middle portion of the device.

It is also provided that the shafts can have a single threaded portion for moving only the cooling means, front 12 or back 13.

To guarantee the correspondence between the cooling means upper 12, 14 and lower 13, 15 the longitudinal adjustment members 18 include control means 39 of the driving of the motors 20, for instance of analogical or digital electronic type. The control means 39 are connected, through signal lines of known type and not shown, to measure means 38, for instance consisting of potentiometers or encoders, connected to the longitudinal shafts 21 for sensing the position of the cooling means upper 12, 14 and lower 13, 15 and for transmitting related signals to the control means 39, which operate the motors 20 in order to position the cooling means front 14, 15 and back 12, 13 at a predefined reciprocal distance corresponding to the sheet 5 length.

Each cooling mean upper 12, 14 or lower 13, 15 includes a central element 25 and two side elements 26 aligned and transversally sliding against a vertical face of the central element 25. The approach or the separation of the two side elements 26 allows to fit the width of each cooling mean 12, 13, 14, 15 to the sheet 5 width.

Each upper cooling mean 14 includes elastic means 27, for instance consisting of two compressed springs, each having an end rigidly connected to the central element 25 and the other end mating the respective side element 26, said elastic means being fit to transmit a repulsive force to the side elements 26 that consequently are in a position of maximum reciprocal distance.

Each opposed ends, or each external ends, of the side elements 26 of each upper cooling mean 12, 14 has a rolling mean 28 consisting, for instance, in a wheel fit to match the clamping means 4. In correspondence of the transfer of the sheet 5 into the device 10, the front ends of the clamping means 4 mate the rolling means 28 which cause the approach of the side elements 26 so automatically obtaining the fitting of the upper cooling means 12, 14 to the sheet 5 width.

The side elements 26 of each lower cooling mean 13, 15 have a respective nut screw mean 29 engaged by a threaded portion respectively right-hand and left-hand, of a rod 30 for the adjustment of the lower cooling mean 13, 15 width. The rotation of the rod 30 can be made, for instance, by means of a manual crank or an electric motor.

In order to avoid that, in correspondence of the sheet 5 transfer in the device 10, the front edge of the this latter stops against the upper cooling means 12, 14, the back and lower portions of these latter have a chamfered bevel 31.

The reciprocally facing surfaces 32 of the upper cooling devices 12, 14 have slanted portions with respect to a transversal plane. This slanted geometry of the surfaces 32 avoids the screening, carried out by the cooling means 14, 15, of the portions of sheet 5 adjacent to the front edges of this last allowing the infrared irradiation of the sheet also from the more external transversal portions of the panels 2, 3.

Each duct 33 extends inside the crosspieces 24 and along inner channel 37 of each central element 25 and side element 26 interconnected by flexible pipes 34, which allow relative motions between the elements 25, 26 and guarantee the flow continuity between the ducts 37.

The device 10 further includes a set of intermediate cooling means 36 slidably connected to two guides 35 fix to the lower panel 3. In correspondence of the lifting of this latter, the intermediate cooling means 36 match transversal portions of the sheet 5 which cannot be buckled during the moulding in the thermoforming station. The intermediate cooling means 36 have ducts 33 for the circulation of a cooling fluid. Thus the intermediate cooling means 36 avoid or reduce the softening of said transversal portions of the sheet 5 by virtue of the screening of the lower panel 3 and the cooling of said portions reducing the bending of the sheet 5 surface.

One of the two guides 35 can be rack shaped at bottom to allow longitudinally moving each intermediate cooling means 36 by operating, manually by means of a crank or an electric motor, a gearwheel hinged to the related intermediate cooling mean 36 and engaged to the rack of the guide 35. The lower portion of the guides 35 can be slidably connected with clearance to "L" shaped arms of the lower cooling means 13, 15 in order to avoid these latter transmitting upwards excessive stresses to the longitudinal shafts 21 and discharging said stresses to the guides 35, through the shaped arms.

Obviously it is also provided that the device 10 cannot include the intermediate cooling means 36.

The device 10 further includes a safety net 6, for instance made of stainless steel, supported by a first frame 40 removably fixed to the lower heating panel 3. The net 6 is superimposed to the irradiative elements of the lower heating panel 3 to protect this latter and the related elements, from straining and drippings of the sheet or plate that may happen for operational errors, imperfection of the plate material or a machine malfunction.

The operation provides that the transfer means insert the sheet 5 into the heating station 1 and, thus, into the device 10 in a lowered condition of the lower panel 3 and therefore of the cooling means lower 13, 15 and intermediate 36, which are raised together with the related panel 3 mating the corresponding portions of the lower side of the sheet 5 in heating position. In correspondence of this last position of the sheet 5, the upper surfaces of the transversal edges of the sheet 5 match the upper cooling means 12, 14. At the end of the heating process, executed by the panels 2, 3, the sheet 5 is transferred in the thermoforming station, in which the edges of the sheet 5 and the cooled middle transversal portions, substantially not bent and coplanar, are fit to mate coplanar elements of the thermoforming station.

The adjustment of the reciprocal distance of the cooling devices front 14, 15 and back 12, 13 is made by setting, for instance through an user interface or analogical controls, the length of the sheet 5 in the control means 39 or manually operating the activation of the motors 20.

The width adjustment of the lower cooling means 13, 15 is made manually acting on the crank of the rod 30 or operating the related motor. The positioning of the intermediate cooling means 36 along the guides 35 is manually or electrically made.

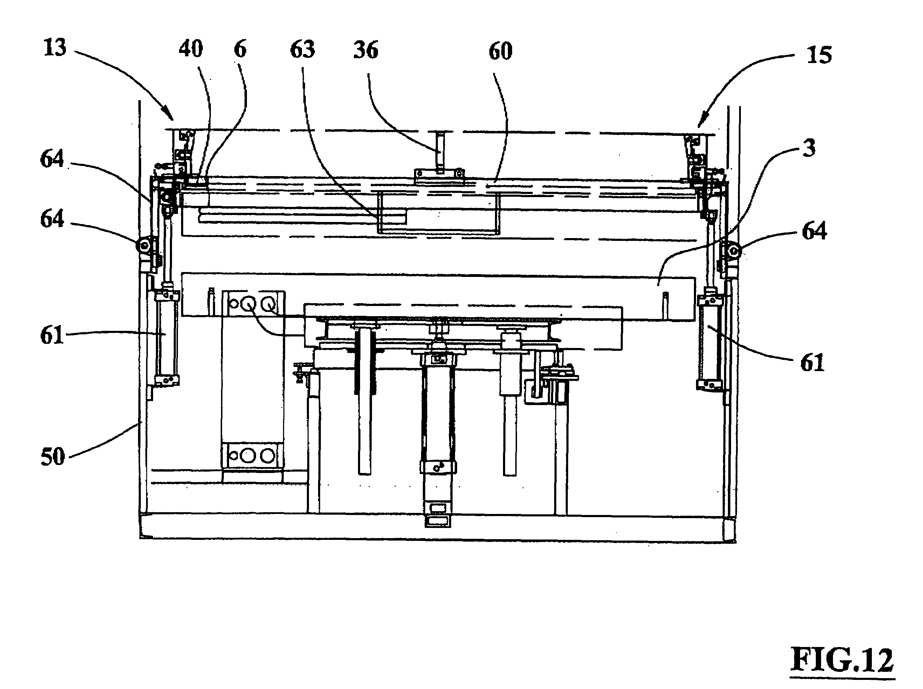

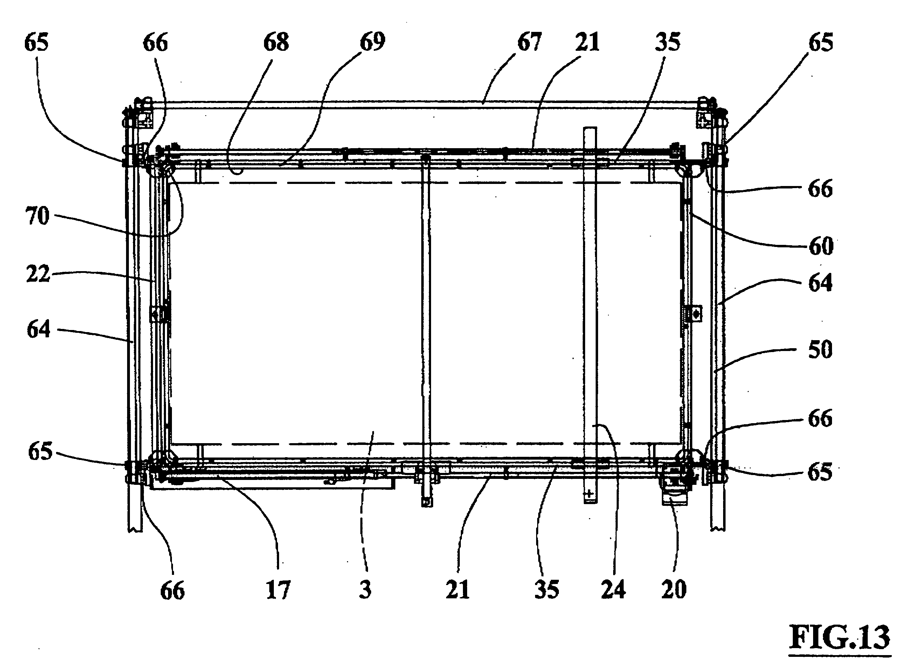

The variant of the device shown in figures 12 and 13 provides that the lower heating panel 3 is disconnected from the cooling means lower 13, 15 and intermediate 36. In said variant the cooling means lower 13, 15 and intermediate 36, the lower adjustment means 17, the first frame 40 and the guides 35 are supported by a second frame 60. This latter is fixed to the structure 50 by means of a couple of linear actuators 61 for instance consisting of pneumatic cylinders for moving the second frame 60.

Each end of the transversal sides of the second frame 60 has a vertical rack 66 engaged by respective pinion 65. The two pinion gears 65 related to each transversal side of the second frame 60 are fixed to an axis 64 rotatably supported by the structure 50.

The two axis 64 are interconnected by means of bevel gear pairs and a connection axis 67.

A longitudinal side of the first frame 40 is hinged at the bottom to the second frame 60. The opposite side of the first frame 40 has locking means 63 which can be manually blocked and released by the lower portion of the second frame 60.

A wall 68, for instance made of stainless steel reflecting the infrared radiation, extends at least inside the second frame 60 forming with this latter an interspace 69 inside which there is a piping 70 in which cooling liquid circulates.

The operation of the device according to said variant provided that, during the usual operation cycles, the lower heating panel 3 and the second frame 60 move almost in synchronism.

The vertical movement of the second frame 60 is executed by the linear actuators 61 and is driven by the coupling between the racks 66 and the related pinion gears 65. In fact these last are forced by the axis 64 and 67 to rotate in synchronism imposing the same motion to the racks 66, which therefore keep horizontal the second frame 60.

In case of emergency, for instance in presence of sheets or plates 5 of faulty material or in presence of machine failure, the lower panel 3 can be lowered and translated while the lower cooling means 13, 15 and eventually the net 6 of the first frame 40 support the plate 5 or its melted material.

The locking means 63 make possible the access to the net 6 of the first frame 40, allowing the rotation of the frame around its hinge axis to remove the possible melted fragments of the plate 5. The purpose of the wall 68 is to screen the infrared radiation of the lower panel 3 to protect the second frame 60, which is besides cooled by the circulation of cooling liquid in the piping 70.

The method for cooling portions of a thermoplastic sheet in a heating station 1 provide:
- to position the cooling means 12, 13, 14 and 15 against the upper and lower surface of the front and back edges of the sheet 5 to screen said surfaces with respect to the heating panels upper 2 and lower 3;
- to cool said surfaces upper and lower of the a front and back edges of the sheet 5 by means of circulation of a cooling fluid in the ducts 33 of the cooling means 12, 13, 14 and 15;
- to allow the heating panels upper 2 and lower 3 irradiating the surfaces adjacent to said front and back edges of a sheet 5, through cooling means front 14, 15 and back 12, 13, whose surfaces 32 reciprocally facing have slanted portions with respect to a transversal plan.

The method further provide:
- to screen with respect to the lower panel 3 the lower surfaces of middle transversal portions of the sheet 5 through intermediate cooling means 36;
- to cool said middle portions through circulation of cooling fluid in ducts 33 of the intermediate cooling means 36.

The main advantage of the present invention is to provide a device and a method for cooling portions of the thermoplastic plate, which cannot be buckled in correspondence of the moulding and, therefore, for preventing the softening and the bending at least of the transversal edges of the thermoplastic plate.

Further advantage is that to provide a device and a method fit to reduce the bending of the plate surface, avoiding the softening of middle portions of the plate, which cannot be buckled by the mould. Other advantage is to provide a device economically advantageous, reliable and having a simple maintenance.

## Claims

1. Device for cooling portions of thermoplastic sheet (5) in a heating station (1), this latter including at least an upper heating panel (2), at least a lower heating panel (3) and transfer means having at least a couple of clamping means (4) having adjustable distance for the support of the longitudinal edges of the sheet (5); said device (10) being **characterized in that** include front cooling means, upper (14) and lower (15), and back cooling means, upper (12) and lower (13), whose distance is determined in adjustable way by adjustment members (18) which mate said cooling means front (14, 15) and back (12, 13) against the transversal edges of the sheet (5) to cool these latter avoiding their softening.

2. Device according to claim 1 **characterized in that** the cooling means, front (14, 15) and back (12, 13), include respective ducts (33) for the circulation of a cooling fluid.

3. Device according to claim 1 or 2 **characterized in that** the cooling means, upper (14, 12) and lower (13, 15), are respectively fixed to adjustment means, upper (16) and lower (17), of the adjustment members (18).

4. Device according to claim 3 **characterized in that** further include a first frame (40) for supporting a net (6) interposed between the lower cooling means (13, 15) and the lower heating panel (3).

5. Device according to claim 3 or 4 **characterized in that** the lower panel (3) supports at least the lower adjustment means (17) and the lower cooling means (13, 15).

6. Device according to claim 3 or 4 **characterized in that** a second frame (60), fixed to the heating station (1) by means of a plurality of linear actuators (61) supports at least the lower adjustment means (17) and the lower cooling means (13, 15).

7. Device according to claim 6 **characterized in that** the second frame (60) has a plurality of vertical racks (66) engaged by related pinion gears (65) interconnected through axis (64, 67) rotatably supported by the heating station (1).

8. Device according to claims 4 and 6 **characterized in that** a side of the first frame (40) is hinged to the second frame (60) and the opposite side of the first frame (40) has locking means (63).

9. Device according to claim 6 **characterized in that** the second frame (60) has internally a wall (68) and forms with this latter an interspace (69) inside which there is a piping (70) in which cooling liquid circulates.

10. Device according to any of the claims from 3 to 9 **characterized in that** each adjustment means, upper (16) and lower (17), include at least a motor (20) for driving two longitudinal shafts (21) interconnected by a transversal shaft (22) and engaged by female elements (23) fixed at the ends of respective support crosspieces (24) of the cooling means respectively upper (12, 14) and lower (13, 15).

11. Device according to claim 10 **characterized in that** the longitudinal shafts (21) have threaded right-hand and left-hand portions for the respective female elements (23).

12. Device according to claim 8 **characterized in that** the longitudinal adjustment members (18) include control means (39) for driving the motors (20) and are connected, by means of signal lines, to measure means (38), these latter being connected to the longitudinal shafts (21) for sensing the position of the cooling means upper (12, 14) and lower (13, 15) and for transmitting related signals to the control means (39) which operate the motors (20) to position the cooling devices front (14, 15) and back (12, 13) at a predefined reciprocal distance corresponding to the sheet (5) length.

13. Device according to any of the claims from 3 to 12 **characterized in that** each cooling mean, upper (12, 14) or lower (13, 15), includes a central element (25) and two side elements (26) transversally sliding against the central element (25).

14. Device according to claim 13 **characterized in that** each upper cooling mean (12, 14) includes elastic means (27) fit to transmit a repulsive force to the side elements (26).

15. Device according to claim 13 **characterized in that** each opposite end of the side elements (26) of each upper cooling mean (12, 14) has a rolling mean (28) matching the clamping means (4).

16. Device according to claim 13 **characterized in that** the side elements (26) of each lower cooling mean (13, 15) has a respective nut screw mean (29) engaged by a respective threaded portion of a rod (30) for the width regulation of each lower cooling mean (13, 15).

17. Device according to any of claims from 3 to 16 **characterized in that** the back and lower portions of the cooling upper means (12, 14) have a chamfered bevel (31).

18. Device according to any of claims from 3 to 17 **characterized in that** the surfaces (32) reciprocally facing of cooling means, upper (12, 14) and lower (13, 15), have inclined portions with respect to a transversal plane.

19. Device according to any of claims from 7 to 18 and claim 3 **characterized in that** each duct (33) includes channels (37) inside each element, central (25) and side (26), interconnected by means of flexible pipes (34).

20. Device according to any of the preceding claims **characterized in that** further includes a set of intermediate cooling means (36) slidably coupled to guides (35).

21. Device according to claim 20 **characterized in that** the intermediate cooling means (36) have ducts (33) for the circulation of a cooling fluid.

22. Method for cooling portions of a thermoplastic sheet (5) in a heating station (1) **characterized in that** provides:
- to position cooling means (12, 13, 14 ,15) against the upper and lower surface of the front and back edges of a sheet (5) to screen only said surfaces with respect to the heating panels, upper (2) and lower (3);
- to cool said surfaces upper and lower of the front and back edges of a sheet (5) through circulation of a cooling fluid in ducts (33) of the cooling means (12, 13, 14, 15);
in order to avoid the softening of said surfaces, upper and lower, of the front and back edges of the thermoplastic sheet (5).

23. Method according to claim 22 **characterized in that** allows the heating panels, upper (2) and lower (3), irradiating the surfaces adjacent to said front and back edges of a sheet (5) through cooling means upper (12, 14) and lower (13, 15) whose surfaces (32) reciprocally facing have inclined portions with respect to a transversal plane.

24. Method according to claim 22 **characterized in that** provides:
- to screen with respect to the lower panel (3) the lower surfaces of middle transversal portions of the sheet (5) through intermediate cooling means (36);
- to cool said middle portions through circulation of cooling fluid in ducts (33) of the intermediate cooling means (36).
